# EUROPEAN PATENT APPLICATION

(11) **EP 4 305 950 A1**
(43) Date of publication of application: **17.01.2024**
(21) Application number: 23179981.8
(22) Date of filing: 19.06.2023
(51) Int. Cl.: A01D 43/10

(54) **IMPROVEMENTS IN A FORAGE HARVESTER**

(30) Priority: 13.07.2022 GB 202210281
(71) Applicant: AGCO International GmbH, 8212 Neuhausen am Rheinfall (CH)
(72) Inventor: DREER, Constantin, 87616 Marktoberdorf (DE)
(74) Representative: AGCO Intellectual Property Department

(57) **Abstract**

In a forage harvester cracker unit drive assembly for driving a first cracker roller and a second cracker roller, the drive assembly comprising a drive pulley, a tension pulley, a first cracker pulley associated with the first cracker roller, a second cracker pulley associated with the second cracker roller, a guide pulley, and a drive belt drivingly connecting each of these pulleys, the drive assembly further comprises a guide pulley adjustment apparatus for adjusting the position of the guide pulley with respect to the second cracker pulley.

## Description

### FIELD OF THE INVENTION

The present invention relates to a forage harvester and in particular to improvements in a drive arrangement for a cracker unit of a forage harvester.

### BACKGROUND

It is known to provide forage harvesters with a cracker unit. The cracker unit includes opposing cracker rollers through which harvested crop is fed. The harvested crop is fed though a chopper unit and into the cracker unit where it is squeezed and crushed between the cracker rollers before being fed to a discharge spout. A drive belt of suitable size is located around a drive gear or pulley and pulleys mounted to an end of each of the cracker rollers.

From time to time an operator of the forage harvester may wish to change the selection of cracker rollers used in the cracker unit. This involves removing the cracker unit from the forage harvester and replacing at least one of the cracker rollers. Different diameters of cracker roller often have different diameters of the associated cracker roller pulleys.

When replacing the cracker unit, the drive belt must also be reconnected around the pulleys at the ends of the cracker rollers. However, the drive belt previously used may no longer be suited for driving the new arrangement, since the path to be taken by the drive belt may now be of differing length to that of the previous arrangement.

Additionally, the change in diameter of a cracker roller pulley will change the force transmission of the drive belt with the cracker roller pulley which may result in a reduced force transmission capability.

One solution is to provide separate mounting points in the cracker unit housing for cracker rollers of different diameter to ensure that the path of the drive belt in each instance is at least substantially similar, if not identical, following substitution of the cracker rollers. However, this increases the cost of manufacture of the cracker unit housing. In addition, it increases the difficulty of the task for the operator when replacing the cracker roller(s) as the operator must ensure that the replacement cracker roller is mounted in the correct position.

A further solution to this problem is the use of a tension pulley which may be displaced by a tensioning cylinder to take up any slack in the drive belt. However, it is necessary that the tensioning cylinder is correctly reset following the substitution of the cracker roller(s) or the drive belt may inadvertently be under- or over-tensioned.

It is an advantage of the present invention that these problems are addressed. Other advantages of the present invention will be apparent from the present disclosure.

### SUMMARY OF THE INVENTION

According to a first aspect of the present invention, in a forage harvester cracker unit drive assembly for driving a first cracker roller and a second cracker roller, the drive assembly comprising a drive pulley, a tension pulley, a first cracker pulley associated with the first cracker roller, a second cracker pulley associated with the second cracker roller, a guide pulley, and a drive belt drivingly connecting each of these pulleys, the drive assembly further comprises a guide pulley adjustment apparatus for adjusting the position of the guide pulley with respect to the second cracker pulley.

This has as an advantage that different diameters of cracker pulleys, associated with differing diameters of cracker rollers can be accommodated without over tensioning the drive assembly and seeking to ensure a desired force transmission capability of the drive belt with the second cracker pulley.

Preferably, the tension pulley is located to act on the drive belt between the drive pulley and the first roller pulley.

Preferably, the guide pulley adjustment apparatus is adapted angularly to displace the guide pulley about a pivot axis offset from an axis of rotation of the guide pulley.

Preferably the guide pulley adjustment apparatus comprises a rotatable body comprising a first axial portion connected to a first side of a central region and a second axial portion connected to a second side of the central region, the guide pulley being mounted for rotation about the second axial portion.

According to a second aspect of the present invention a forage harvester comprises a forage harvester frame and a forage harvester cracker unit including a cracker unit drive assembly according to the first aspect of the invention characterised in that the guide pulley adjustment apparatus is mounted to the forage harvester frame at a single mounting point provided on the forage harvester frame.

This has as an advantage that the forage harvester frame is simpler to manufacture while allowing for flexibility in the diameters of the cracker rollers that may be used by an operator of the forage harvester.

A method of adjusting the circumferential contact area of the drivebelt with the cracker pulley in a forage harvester cracker unit drive assembly according to the first aspect of the invention comprises the steps of releasing the guide pulley adjustment apparatus, adjusting the angular position of the guide pulley with respect to the second cracker pulley and securing the guide pulley apparatus in position.

### BRIEF DESCRIPTION OF THE DRAWINGS

The invention will now be described, by way of example only, with reference to the accompanying drawings, in which:
Figure 1 shows a schematic side view of a forage harvester;
Figure 2 shows a schematic side view of elements of a prior art arrangement of a drive means of a forage harvester to drive cracker rollers of equal diameter;
Figure 3 shows a schematic side view of elements of a prior art arrangement of drive means a forage harvester to drive the cracker rollers of unequal diameter;
Figure 4 shows a schematic side view of the elements of Figure 3 illustrating a necessary adjustment in accordance with the present invention;
Figure 5 shows an isometric view of a cracker unit and the drive arrangement for the cracker unit in accordance with the present invention in position on a frame of a forage harvester;
Figure 6 shows an isometric view from a first side of elements of the drive arrangement in accordance with the present invention;
Figure 7 shows a detail of one element of the drive means for the cracker rollers of a forage harvester in accordance with the present invention; and
Figure 8 shows a side sectional view of the element shown in Figure 7.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

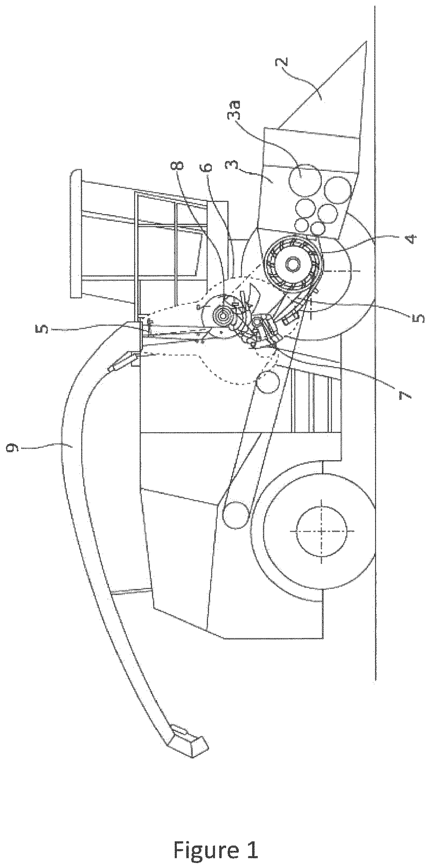

Figure 1 shows a forage harvester provided with a front attachment 2 such as a header which contains cutting equipment for cutting and harvesting a crop. The cut crop is fed through a series of compression rolls 3a in a compression roller housing 3 to a chopper drum 4 where the crop is chopped into smaller pieces. The chopped crop passes through a duct 5 and is optionally directed into a cracker unit 6 where the crop is further crushed and threshed. The harvested crop is then blown upwards along a duct 5 by an accelerator 8 and exits through a spout 9.

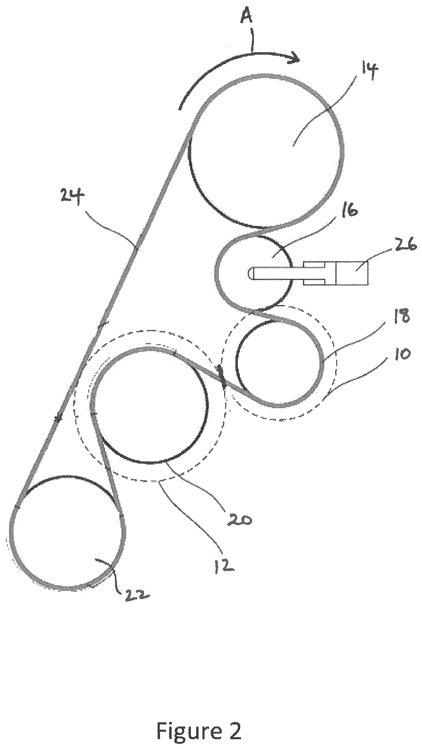

With reference to Figure 2, a schematic side view illustrates the relationship of elements of a prior art arrangement for driving first and second cracker rollers 10,12 of the cracker unit 6 in a forage harvester. The drive arrangement for the cracker unit 6 comprises a drive pulley 14, a tension pulley 16, first and second roller pulleys 18,20 associated with the respective first and second cracker rollers 10,12 and a guide pulley 22. A drive belt 24 is located about the rollers of the drive arrangement to define a drive belt path. The tensioning pulley 16 is located adjacent the guide belt between the drive pulley 14 and the first roller pulley 18. A tensioning cylinder 26 is provided to allow movement of the tensioning pulley to allow tensioning of the drive belt 24, by acting on the drive belt 24 between the drive pulley 14 and the first roller pulley 18. The guide pulley 22 is located in the drive belt path between the second roller pulley 20 and the drive roller 14. It will be appreciated from Figure 2 that the drive pulley 14 and the guide pulley 22 are located at opposing ends of the drive belt path.

The drive pulley 14 drives the belt in the direction of arrow A. In this way the cracker rollers 10,12 are driven to rotate in opposite directions. The guide pulley 22 serves to direct the drive belt 24 to the drive pulley 14 after the drive belt has caused the counter-clockwise rotation (as seen in Figure 2) of the lower cracker roller 12. In Figure 2 it can be seen that the drive belt 24 has a degree of wrapping or circumferential contact area about each of the first and second roller pulleys 18,20. It is desirable that the circumferential contact area is as large as possible to ensure adequate tension in the drive belt 24 and the best torque transmission between the drive belt 24 and the roller pulleys 18,20.

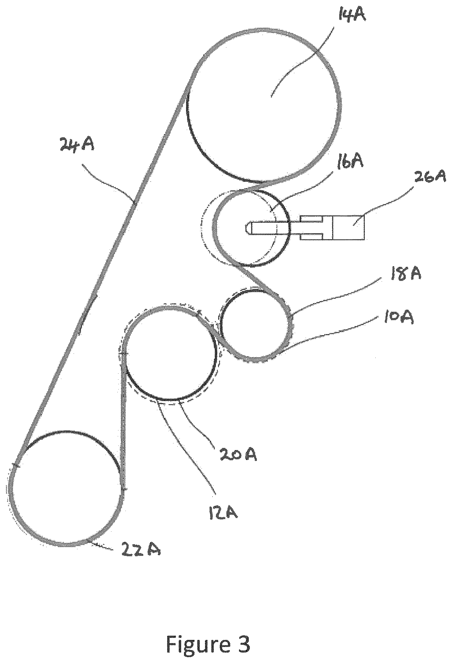

In Figure 3 a similar belt and pulley configuration is shown as in Figure 2, except that smaller diameter cracker rollers 10A, 12A with smaller diameter roller pulleys 18A, 20A have been utilised. Such a construction allows for higher rotational speeds of the cracker rollers 10A,12A. While the upper cracker roller 10A rotates about the same axis as before, the lower cracker roller 12A is mounted at a different location to ensure the proximity of the surfaces of the cracker rollers 10A, 12A as they are rotated. It will be noted that the circumferential contact area, due to the change in path of the gear belt 24A, is much reduced leading to a reduced force transmission capability. This can lead to slippage of the drive belt 24A.

This problem can be addressed to some extent by using the tension cylinder 26 to alter the position of the tension pulley 16, for example to move the tension pulley from the solid line position in Figure 2 to the dotted line position. However, while this increases the circumferential contact area for the upper roller pulley 10A, this does not change the situation for the lower roller pulley 12A. Even so this solution has its own disadvantage in that excessive tensioning of the drive belt 24A can result in damage to the drive belt 24A, requiring an operator to shut down operation of the forage harvester while replacement of the drive belt 24A occurs.

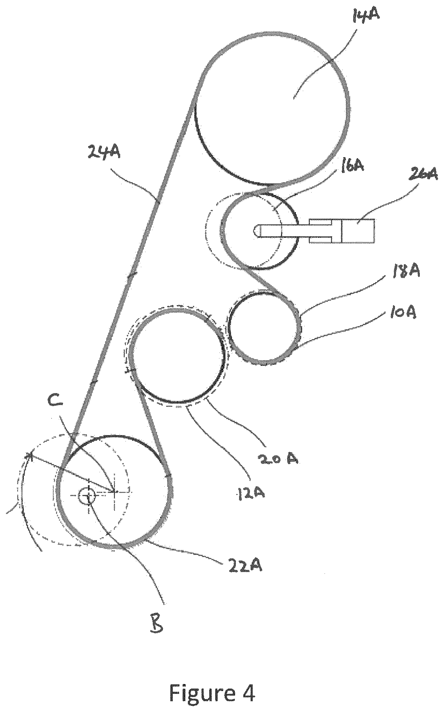

Figure 4 illustrates a solution provided in line with the present invention. In addition to the movement of the tension pulley 16A to alter the circumferential contact area for the upper roller pulley 10A, the guide pulley 22A may be moved (toward the left as shown in Figure 4) to move the guide pulley 22A from the dotted line position of Figure 4 (the position in Figures 1 and 2) to the solid line position of Figure 4. As may be seen this has increased the circumferential contact area of the drivebelt 24A with the lower cracker roller 12A.

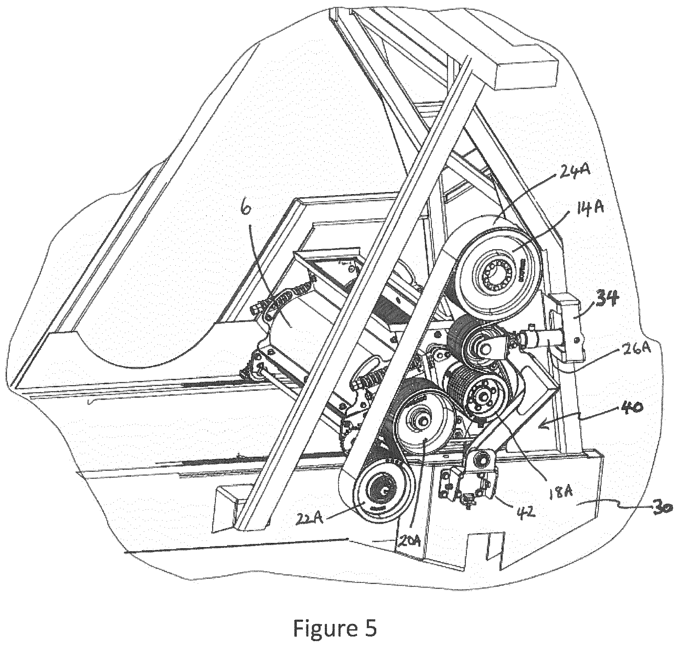

Figure 5 shows an isometric view of the cracker unit 6 and the drive arrangement for the cracker unit 6. As can be seen the cracker unit 6 and the drive arrangement for the cracker unit 6 are mounted on a frame 30 of the forage harvester.

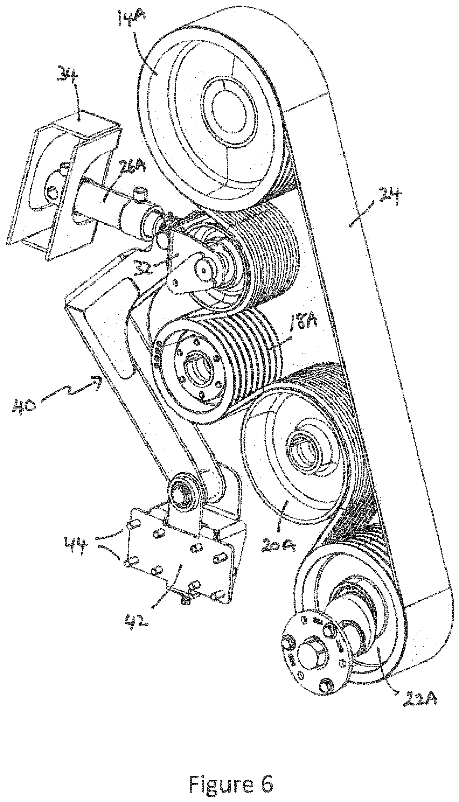

Figure 6 shows an isometric view of the drive arrangement for the cracker unit 6. For reasons of clarity, the drive roller 14A is shown without its connection to an associated drive motor and the first and second cracker pulleys 18A, 20A are shown without their associated cracker rollers.

The tensioning pulley 16A can be seen to be connected to the tensioning cylinder 26A by way of a clevis arrangement 32. As may best be seen in Figure 5 the tensioning cylinder 26A is mounted at its first end to a housing 34 secured to the frame 30 of the forage harvester. The tensioning cylinder 26A is further connected in the region of the clevis arrangement 32 to a first end of a displaceable L-shaped support 40. The L-shaped support 40 is pivotally connected at a second end to a bracket 42. The bracket 42 is itself secured to the frame of the forage harvester in any suitable manner.

As may best be seen in Figures 5 and 6 the bracket 42 is secured to the frame of the forage harvester by a plurality of bolts 44.

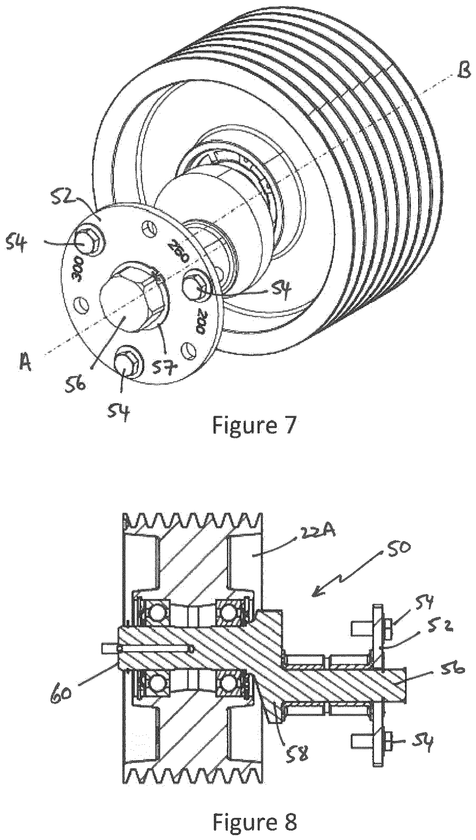

The guide pulley 22A is connected to a pulley support 50. This can best be seen in Figures 7 and 8. The pulley support 50 comprises a flange plate 52 and an adjustable body supported by the flange plate 52.

The flange plate 52 of the pulley support is generally circular and includes a central opening as well as a number of further circumferentially spaced openings located radially outward of the central opening. The flange plate 52 is conventionally provided with a markings adjacent the circumferentially spaced openings. In the illustrated embodiment these markings comprise the numerals 200,250 and 300.

The flange plate 52 of the pulley support is adapted to be secured to the frame 30 of the forage harvester. The flange plate 52 may be secured to the frame 30 in any suitable fashion for example by threaded headed fasteners such as bolts 54 extending through the circumferentially spaced openings of the flange plate and the frame 30.

The adjustable body comprises a first axial portion 56 connected to a first side of a central region 58 and a second axial portion 60 connected to a second side of the central region 58. A distal end of the second axial portion 60 supports the guide pulley 22A for axial rotation about the second axial portion 60. A central axis A of the first axial portion 60 and a central axis B of the second axial portion 60 are offset from one another.

The first axial portion 56 is of regular non-circular cross section. In the illustrated example the first axial portion 56 is of hexagonal cross section. The first axial portion 56 and the central opening of the flange plate are shaped and sized to match one another. In this way when the first axial portion 56 extends through the central opening of the flange the adjustable body is located in a fixed position. The adjustable body is retained in this position by the presence of a circlip 57 axially securing the first axial portion 56 in position.

A position of the guide pulley 22A may be altered in the following manner. The fasteners are loosened so that they no longer engage with the frame 30 and the circlip 57 removed from the first axial portion 56. The first axial portion 56 of the adjustable body may now be removed from the flange 52 and the adjustable body rotated about the central axis A of the first axial portion before being re-inserting the first axial portion 56 into the central opening. The fasteners can then be replaced and the flange 30 secured once again to the frame 30.

A marking or other indication may be provided on the first axial portion 56 for alignment with one of the markings on the flange in order than an operator can correctly orient the adjustable body into the desired position for the size of cracker roller to be used. In the illustrated embodiment, the numerals 200, 250 and 300 indicate the correct angular position for the adjustable body for correct mounting cracker rollers of 200mm, 250mm and 300mm diameter on the second axial portion 60.

From reading the present disclosure, other modifications will be apparent to persons skilled in the art. Such modifications may involve other features which are already known in the field of forage harvesters and component parts therefore and which may be used instead of or in addition to features already described herein.

## Claims

1. A forage harvester cracker unit drive assembly for driving a first cracker roller and a second cracker roller, the drive assembly comprising a drive pulley, a tension pulley, a first cracker pulley associated with the first cracker roller, a second cracker pulley associated with the second cracker roller, a guide pulley, and a drive belt drivingly connecting each of these pulleys, the drive assembly further comprising a guide pulley adjustment apparatus for adjusting the position of the guide pulley with respect to the second cracker pulley.

2. A cracker unit drive assembly according to claim 1, **characterised in that** the tension pulley is located to act on the drive belt between the drive pulley and the first roller pulley.

3. A cracker unit drive assembly according to claim 1 or claim 2, **characterised in that** the guide pulley adjustment apparatus is adapted angularly to displace the guide pulley about a pivot axis offset from an axis of rotation of the guide pulley.

4. A cracker unit drive assembly according to any of claim 1 to claim 3, **characterised in that** the guide pulley adjustment apparatus comprises a rotatable body comprising a first axial portion connected to a first side of a central region and a second axial portion connected to a second side of the central region, the guide pulley being mounted for rotation about the second axial portion.

5. A forage harvester comprising a forage harvester frame and a forage harvester cracker unit including a cracker unit drive assembly according to any of claim 1 to claim 4, **characterised in that** the guide pulley adjustment apparatus is mounted to the forage harvester frame at a single mounting point provided on the forage harvester frame.

6. A method of adjusting the circumferential contact area of a drivebelt with the cracker pulley in a forage harvester cracker unit drive assembly according to any of claims 1 to 4 comprises the steps of releasing the guide pulley adjustment apparatus, adjusting the angular position of the guide pulley with respect to the second cracker pulley and securing the guide pulley apparatus in position.
